Europäisches Patentamt

European Patent Office

Office européen des brevets

(19)

(11) EP 0 666 608 B1

## (12) FASCICULE DE BREVET EUROPEEN

(45) Date de publication et mention
de la délivrance du brevet:
**21.04.1999 Bulletin 1999/16**

(51) Int Cl.⁶: **H01M 10/34**, H01M 10/52,
H01M 4/24

(21) Numéro de dépôt: **95400159.0**

(22) Date de dépôt: **25.01.1995**

(54) **Générateur électrochimique secondaire à électrolyte aqueux sans maintenance**

Wartungsfreier aufladbarer elektrochemischer Generator mit wässrigem Elektrolyten

Maintenance-free rechargeable electrochemical generator with aqueous electrolyte

(84) Etats contractants désignés:
**DE ES FR GB IT SE**

(30) Priorité: **27.01.1994 FR 9400885**

(43) Date de publication de la demande:
**09.08.1995 Bulletin 1995/32**

(73) Titulaire: **ALCATEL**
**75008 Paris (FR)**

(72) Inventeurs:
• **Sanchez, Patrick**
**F-33290 Le Pian Medoc (FR)**
• **Metayer, Edith**
**F-33110 Le Bouscat (FR)**

(74) Mandataire: **Bourely, Paul et al**
**c/o ALCATEL ALSTHOM,**
**Département de Propriété Industrielle,**
**30, avenue Kléber**
**75116 Paris (FR)**

(56) Documents cités:
EP-A- 0 416 244       EP-A- 0 552 441
DE-A- 2 907 262       DE-A- 3 929 306
FR-A- 1 243 784       FR-A- 2 647 968
US-A- 3 438 812

• PATENT ABSTRACTS OF JAPAN, vol. 13, no.
280 (E-779), 27 juin 1989
• PATENT ABSTRACTS OF JAPAN, vol. 10, no.
117 (E-400), 02 mai 1986
• PATENT ABSTRACTS OF JAPAN, vol. 15, no. 50
(E-1030), 06 février 1991
• PATENT ABSTRACTS OF JAPAN, vol. 13, no.
160 (E-744), 18 avril 1989

EP 0 666 608 B1

## Description

La présente invention concerne un générateur électrochimique secondaire à électrolyte aqueux sans maintenance. Elle s'applique plus particulièrement aux accumulateurs étanches de forme prismatique électrolyte alcalin aqueux fonctionnant à basse pression (de l'ordre de 2 bars absolus) dont la capacité est élevée, comprise entre 10 et 100Ah. Ces accumulateurs sont de type Nickel-Cadmium ou Nickel-Hydrure.

Le fonctionnement des accumulateurs à électrolyte alcalin aqueux ouverts provoque des réactions de dégagement gazeux, respectivement d'oxygène sur l'électrode positive ou cathode et d'hydrogène sur l'électrode négative ou anode, il en résulte une consommation d'eau. Pour éviter les remises à niveau d'électrolyte consécutives aux périodes de fonctionnement, on utilise de préférence des accumulateurs sans maintenance de l'électrolyte, ou étanches. Dans ce type d'accumulateur, on s'affranchit du dégagement d'hydrogène lors de la période de surcharge par l'utilisation d'une électrode négative contenant un excès de capacité et incomplètement chargée. L'oxygène formé sur l'électrode positive conduit alors à une élévation de la pression interne de l'accumulateur qui dépend du régime de surcharge utilisé. Il s'établit ensuite un régime permanent au cours duquel l'oxygène produit à l'électrode positive selon la réaction (1] est réduit, ou recombiné, sur l'électrode négative selon la réaction [2], le bilan réactionnel est nul:

$$4\ OH^- \rightarrow 2\ H_2O + O_2 + 4e^- \qquad\qquad [1]$$

$$2\ H_2O + O_2 + 4e^- \rightarrow 4\ OH^- \qquad\qquad [2]$$

Le mécanisme de recombinaison implique la présence simultanée de trois phases: solide (conducteur électronique)-liquide (eau) -gaz (oxygène). Ceci peut être obtenu par un équilibrage des caractéristiques hydrophiles et hydrophobes au sein de l'électrode négative. De nombreux travaux y ont été consacrés, portant sur des dépôts de surface (USP-4,987,041; USP-4,614,696; USP-4,826,744) ou sur la réalisation d'électrodes multicouches (USP-3,385,780). Mais le caractère hydrophobe de l'électrode négative obtenu de cette manière est généralement de courte durée, le nombre de sites de recombinaison disponibles diminue, et au fur et à mesure de l'utilisation de l'accumulateur la pression interne s'élève.

Aujourd'hui on préfère incorporer dans l'accumulateur une électrode auxiliaire, électriquement connectée à l'électrode négative, qui est le siège de la recombinaison. Une telle électrode à oxygène se compose généralement d'une face totalement ou partiellement hydrophile, fréquemment catalytique, et d'une face hydrophobe, habituellement en PTFE. Si nécessaire on peut leur adjoindre une couche conductrice ou un collecteur de courant.

Une électrode tricouche est divulguée dans le brevet américain n°5,122,426. Elle est composée d'une couche hydrophile placée entre deux couches hydrophobes dont l'une est conductrice et au contact électrique de l'électrode négative. La couche hydrophile et la couche hydrophobe non-conductrice sont constituées d'une structure non-tissée très poreuse en matériau synthétique.

Cette conception présente des inconvénients et la pression interne d'un tel accumulateur va certainement augmenter au cours du temps. D'une part la réalisation d'une telle électrode auxiliaire exige de nombreuses étapes, et le caractère hydrophobe de l'électrode tend à disparaître au cours du temps. En effet il se produit une migration des tensioactifs utilisés dans la couche hydrophile. Il en résulte que la couche hydrophobe non-conductrice devient mouillable et se remplit d'électrolyte, ce qui limite l'accès de l'oxygène.

D'autre part, il est connu que les électrodes d'un accumulateur alcalin au nickel présentent une augmentation de volume, souvent appelé gonflement, lors d'une utilisation prolongée de l'accumulateur. Ce gonflement provoque l'écrasement des composants à faible tenue mécanique, comme par exemple les séparateurs. Dans le cas présent, l'écrasement de l'électrode de recombinaison est inévitable car elle est constituée du même matériau non-tissé que le séparateur pour les couches hydrophile et hydrophobe non-conductrice, et de poudre agglomérée par un liant pour la couche conductrice.

La demande de brevet allemand DE-3 929 306 décrit un générateur de format bouton, dont il n'est pas précisé si l'électrode positive est au nickel. Ce générateur contient une électrode pour la recombinaison de l'oxygène qui est séparée du conteneur par un ressort assurant le contact électrique et permettant la diffusion de l'oxygène. L'électrode de recombinaison est formée d'un simple mélange d'une poudre de matériau carboné avec un liant, ce qui ne lui confère aucune rigidité.

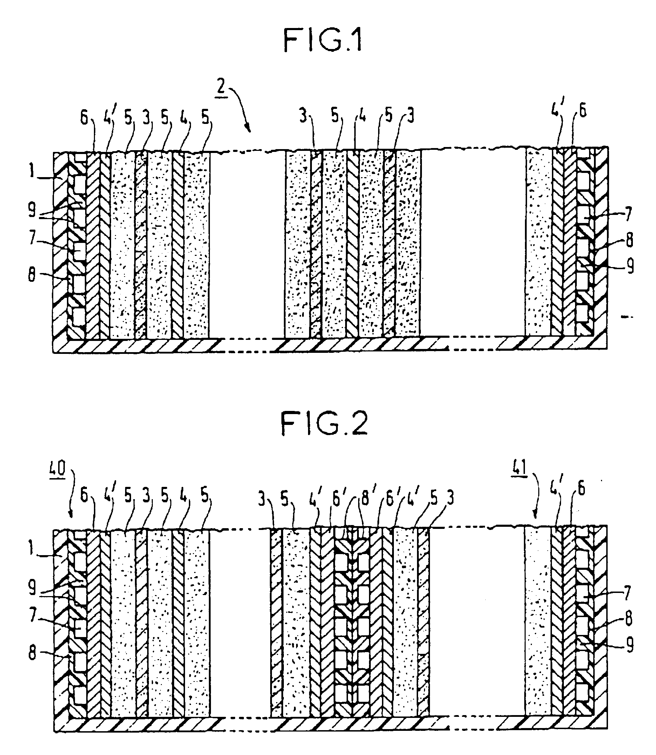

La demande de brevet européen EP-0 552 441 décrit un accumulateur de format bouton comprenant une électrode positive au nickel et une électrode auxiliaire pour le recombinaison de l'oxygène composée d'un réseau de nickel enduit d'un mélange d'une poudre de matériau carboné et d'un liant. Sur la figure 1 on voit qu'une pièce en forme de ressort délimite un espace vide entre l'électrode auxiliaire et le couvercle.

Sous l'effet du gonflement de l'électrode positive au nickel, tous les constituants du faisceau sont repoussés. A cause de la pression transmise par l'électrode négative, l'électrode auxiliaire va se déplacer, se déformer et remplir l'espace vide qui lui est contigu et qui ne lui oppose pas de résistance, et enfin écraser le ressort. En conséquence l'accès de l'oxygène à l'électrode de recombinaison se trouvera très réduit.

La présente invention propose un générateur électrochimique secondaire étanche, de forte capacité et fonctionnant à faible pression, qui ne nécessite pas de maintenance, et dont les performances sont maintenues pendant toute sa durée d'utilisation.

L'objet de la présente invention est un générateur électrochimique secondaire étanche à électrolyte alcalin aqueux, comportant au moins une anode et au moins une cathode, une électrode pour la recombinaison de l'oxygène reliée électriquement à ladite anode comprenant une pâte contenant un matériau carboné et un liant, ladite électrode ayant deux faces opposées de grande surface dont la première face est accolée à ladite anode et la deuxième face est au contact d'un espace permettant l'accès de l'oxygène à ladite électrode, caractérisé en ce que ledit générateur, de capacité au moins égale à 5Ah et de faible pression interne, ccmporte dans un bac prismatique un faisceau de couples électrochimiques comprenant chacun une anode et une cathode contenant de l'hydroxyde de nickel, ladite électrode de recombinaison comprend un support conducteur en mousse et est suffisamment rigide pour résister à la pression dudit faisceau et ledit espace est formé par ladite deuxième face coopérant avec une structure incompressible qui possède une rigidité suffisante perpendiculairement à la surface de ladite électrode et comprend des reliefs au contact de ladite deuxième face de ladite électrode évitant sa déformation, de telle sorte que le volume dudit espace soit sensiblement constant pendant toute la durée d'utilisation dudit générateur.

Le gonflement des électrodes du faisceau se produit dans la direction perpendiculaire à leur plus grande surface. L'électrode de recombinaison est partiellement hydrophobe. Selon l'invention la structure constituant l'espaceur doit posséder une rigidité suffisante perpendiculairement à la surface de l'électrode de recombinaison, qui est elle-même rigide, afin que l'espace ménagé ne soit pas comprimé par le faisceau et permette un accès aisé de l'oxygène. Si la surface de contact entre cet espace et l'électrode de recombinaison doit être la plus grande possible, le volume de cet espace n'est pas nécessairement important. Par exemple une épaisseur de 0,3mm, obtenue en utilisant un déployé de nickel comme structure, suffit à permettre un accès de l'oxygène assurant une pression interne de l'accumulateur acceptable.

Ladite électrode de recombinaison est composée d'un support conducteur de courant en mousse de nickel enduit d'un mélange de carbone, de polytétrafluoroéthylène (PTFE), et d'un agent d'accrochage. De préférence, ledit mélange se compose de 70% en poids de carbone, 20% en poids de PTFE, et 10% en poids d'une colle polyester. L'électrode est ensuite simplement séchée. Le support conducteur est une mousse de porosité supérieure à 90% ; une fois enduite elle est suffisamment rigide pour résister à la pression exercée par le faisceau.

Le PTFE a pour rôle de réaliser la cohésion des particules de carbone et de renforcer le caractère hydrophobe du carbone. On réalise ainsi une couche partiellement hydrophobe qui peut s'imprégner d'électrolyte sans toutefois se noyer ce qui garantie la présence d'un grand nombre de sites réactionnels triphasiques. Au cours de la préparation de la pâte, le PTFE forme des fibrilles dont le pouvoir couvrant très faible minimise le nombre de sites réactionnels qui pourraient être masqués ou enrobés, ainsi l'activité du carbone reste importante.

La colle de type polyester permet de briser les agglomérats de carbone qui se forment au cours de la préparation de la pâte, on obtient ainsi un dépôt régulier sur le support. Elle assure aussi l'accrochage de la pâte sur le collecteur de courant sans en modifier le caractère hydrophobe.

Ladite structure comprend une pièce comportant des reliefs au contact de ladite deuxième face de ladite électrode de recombinaison. ces reliefs peuvent toutes sortes de forme à condition qu'elles limitent la déformation de l'électrode de recombinaison. Cette pièce peut être en métal, en plastique, ou en tout autre matière inerte et stable chimiquement.

Selon une variante de réalisation, ladite pièce comporte des côtes rectilignes. Les côtes rigides peuvent être parallèles ou obliques par rapport aux bords de la pièce, elles peuvent aussi se croiser. De préférence lorsque ces côtes sont disposées parallèlement, leur espacement est tel que la surface accessible au gaz représente plus de 60% de la surface de l'électrode. Leur nombre est choisi de manière à éviter toute déformation excessive de l'électrode de recombinaison au cours du fonctionnement de l'accumulateur.

Selon une autre variante de réalisation, ladite pièce est choisie parmi un déployé, une grille, et un tissu. On entend par déployé, une feuille où des fentes de faible longueurs ont été pratiquées et qui est ensuite étirée dans la direction perpendiculaire à ces fentes. On entend par grille, un quadrillage formé par des fils superposés et solidarisés, par exemple par fusion ou par collage. On entend par tissu une surface composée de fils entrelacés, soit tissés, soit maillés.

Selon encore une autre variante de réalisation, ladite pièce est constituée par de reliefs solidaires la paroi interne dudit bac. Ceci permet de diminuer le volume occupé par cette pièce sans diminuer l'espace permettant à l'oxygène d'accéder à la surface de chaque électrode de recombinaison. Par exemple au cours de la fabrication du bac, on peut réaliser des reliefs, comme des côtes, dans la pièce constituant le bac. On peut aussi fixer sur la paroi interne du bac par un moyen approprié un tissu par exemple, ce qui a pour avantage de le rigidifier et de rendre sa manipulation plus aisée.

De préférence, ladite structure est hydrophobe. La structure hydrophobe garantie l'accessibilité permanente de l'oxygène à toute la surface de l'électrode car elle ne retient pas d'électrolyte pouvant limiter cet accès.

Selon une première variante de réalisation, ladite électrode de recombinaison et ladite structure qui lui est associée sont situées à l'une des extrémités dudit faisceau d'électrodes. L'électrode de recombinaison se trouve accolée à l'anode placée à l'extrémité du faisceau, à laquelle elle est électriquement reliée, de manière à être en contact avec la solution électrolytique. Ce positionnement permet de développer des films fins d'électrolyte sur la surface de l'électrode de recombinaison et d'accroître ainsi le nombre de sites de recombinaison où les trois phases se trouvent réunies. Les reliefs de la pièce de la structure sont appliqués sur la face libre de l'électrode de recombinaison afin que l'espace libre se trouve au contact de l'électrode. La partie opposée de la pièce s'appuie sur la paroi interne du bac de l'accumulateur, généralement en matière plastique.

Selon une deuxième variante, ladite électrode de recombinaison et ladite structure qui lui est associée sont situées a chacune des extrémités dudit faisceau d'électrodes.

Selon une troisième variante, ledit faisceau d'électrodes est divisé en sous-faisceaux et par le fait que ladite électrode de recombinaison et ladite structure qui lui est associée sont situées à chacune des extrémités desdits sous-faisceaux d'électrodes. Ainsi le faisceau peut comporter autant de sous-faisceaux que souhaité.

Avantageusement, deux structures placées côte à côte entre deux sous-faisceaux, sont constituées d'une seule pièce portant des reliefs sur chacune de ses faces. Les structures associées aux électrodes de recombinaison placées entre deux sous-faisceaux peuvent comprendre deux pièces similaires comportant des reliefs sur une face et montées dos à dos ou bien une seule pièce comportant des reliefs sur ses deux faces opposées ménageant un espace libre incompressible au contact de la surface de chacune des électrodes de recombinaison. cette deuxième solution présente l'avantage de diminuer le volume occupé par les structures sans diminuer l'espace permettant à l'oxygène d'accéder a la surface de chaque électrode de recombinaison.

Selon un mode de réalisation, le générateur selon la présente invention comporte une anode contenant un alliage hydrurable.

Selon un autre mode de réalisation, le générateur selon la présente invention comporte une anode contenant du cadmium. Selon une première variante, l'anode ou électrode négative est constituée d'un collecteur de courant en nickel fritté contenant une matière active à base d'hydroxyde de cadmium. Selon une autre variante, l'anode est constituée d'un collecteur de courant de grande porosité en mousse, en fibre de nickel, ou d'un feuillard de nickel ou d'acier nickelé qui est enduit d'une pâte contenant de l'oxyde de cadmium et un liant polymère. ou bien encore l'anode peut contenir du cadmium électrodéposé.

La cathode est constituée d'un collecteur de courant en nickel fritté contenant une matière active à base d'hydroxyde de nickel et contenant au moins un hydroxyde de cadmium, et/ou de cobalt, et/ou de zinc. Elle peut également être constituée d'un collecteur de courant de grande porosité en mousse ou en fibre de nickel, ou d'un feuillard de nickel ou d'acier nickelé qui est enduit d'une pâte à base d'hydroxyde de nickel et d'un liant polymère.

L'électrolyte est une solution aqueuse d'hydroxydes, par exemple de sodium, de potassium, ou de lithium, et leurs mélanges. Sa concentration est de préférence comprise entre 7N et 9N.

La présente invention a comme avantage la simplicité de réalisation et la stabilité pendant toute la durée de vie de l'accumulateur. De plus ce système de recombinaison autorise la charge à régime élevé et ne modifie pas les caractéristiques de l'accumulateur en décharge à fort régime et/ou à basse température.

D'autres caractéristiques et avantages de la présente invention apparaitront à la lecture des exemples suivants de modes de réalisation, donnés bien entendu à titre illustratif mais nullement limitatif, en référence au dessin annexé sur lequel:

- la figure 1 représente une vue schématique en coupe partielle d'un générateur selon la présente invention,
- la figure 2 est une vue schématique en coupe partielle d'une variante du générateur selon l'invention,
- la figure 3 montre une vue partielle agrandie en perspective de l'espaceur des figures 1 et 2,
- la figure 4 montre une vue schématique agrandie en plan d'une variante de l'espaceur,
- la figure 5 est une comparaison des déformations : (en %) d'une électrode de recombinaison associée à des espaceurs de différentes structures en fonction de la contrainte C appliquée (enDaN/cm$^2$),
- la figure 6 donne l'évolution de la pression de recombinaison P (en bars) dans un générateur selon l'invention pour différent régimes I de surcharge (en A/Ah),
- la figure 7 est analogue a la figure 6 pour différentes structures.

Comme le montre la figure 1 en coupe partielle, un générateur électrochimique selon l'invention se compose d'un bac 1 de forme parallélépipèdique et d'un faisceau 2 comportant plusieurs couples d'électrodes composés d'une électrode positive 3 ou cathode, d'une électrode négative 4 ou anode, et d'un séparateur 5 imprégné d'électrolyte. A l'extrémité du faisceau 2, se trouve placée une électrode de recombinaison 6 associée un espace 7 formée par l'intercalation d'une structure jouant le rôle d'espaceur 8. L'électrode de recombinaison 6 est connectée électriquement à la polarité négative et placée directement contre l'électrode négative 4' externe au faisceau 2 d'électrodes. L'espaceur 8 est muni de reliefs 9, qui s'appuient sur la face 10 de l'électrode de recombinaison 6 opposée à l'électrode négative 4', ménageant ainsi un espace libre 7. Habituellement le faisceau comporte une électrode négative supplémentaire de telle sorte qu'il se trouve encadré par deux électrodes négatives externes 4', chacune d'elles étant accolée à une électrode de recombinaison 6 associée à un espaceur 8.

La figure 2 représente une variante du générateur selon la présente invention dans lequel le faisceau d'électrodes est divisé en plusieurs sous-faisceaux 40 et 41. Chaque sous-faisceau 40 ou 41 possède des électrodes négatives externes 4' auxquelles sont accolées les électrodes de recombinaison 6. Les électrodes de recombinaison 6' situées entre deux sous-faisceaux sont placées de telle sorte que leurs espaceurs 8' se trouvent dos à dos. L'ensemble constitué par les deux espaceurs 8' peut être réalisé d'une seule pièce munie de reliefs sur chacunes de ses faces.

Une vue agrandie de l'espaceur 8 des figures 1 et 2 est donnée par la figure 3. Les reliefs 9 sont constitués par des côtes de section JKLM et d'intervalle MN. La surface 30 est en contact avec l'électrode négative 4'. L'oxygène circule dans les canaux de section LMNO ainsi ménagés, et est en contact avec l'électrode de recombinaison par les surfaces 31.

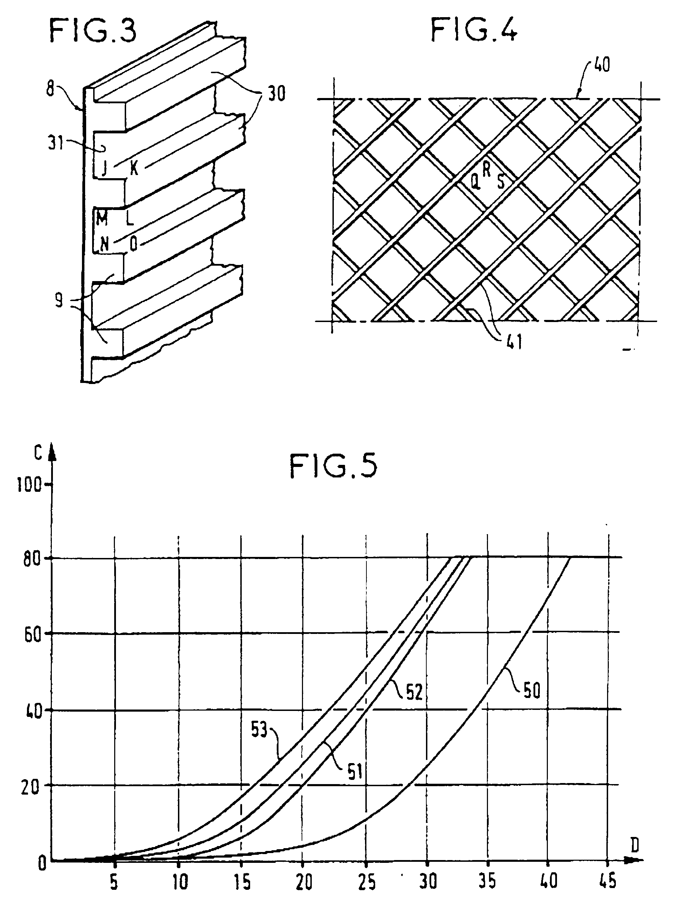

Selon une variante que montre la figure 4, l'espaceur 40 est constitué par une grille de plastique à mailles carrées de côté QR = RS compris entre 1 et 10mm. L'épaisseur des brins 41 est comprise entre 0,2 et 1,5mm. Qn peut également envisager d'utiliser une grille analogue mais de mailles en losanges. Pour un générateur analogue à celui représenté sur la figure 2, les espaceurs 8' associés aux électrodes de recombinaison se trouvant entre deux sous-faisceaux peuvent être constitués par une seule grille analogue à celle de la figure 4.

Si on compare la déformation D d'une électrode de recombinaison associée à des espaceurs de composition différente sous la contrainte c, ce que montre la figure 5, on voit que la déformation D est importante pour un espaceur en feutre (courbe 50). Par contre lorsque l'espaceur est un espaceur côtes analogue à la figure 3 (courbe 51) ou une grille de plastique analogue à la figure 4 (courbe 52), la déformation D est plus faible et tend à se rapprocher de celle de l'électrode seule (courbe 53). La déformation subit au cours de l'utilisation de l'accumulateur par le système de recombinaison selon la présente invention se traduit par une faible diminution de l'espace libre 7 (de l'ordre de 2%) qui n'engendre pas de variations significatives de fonctionnement pour les régimes de surcharge usuels.

## EXEMPLE 1

On réalise un accumulateur Al selon l'invention analogue à celui représenté sur la figure 1, composé d'un bac en matière plastique contenant un faisceau de 5 couples d'électrodes, une électrode négative supplémentaire, et un système de recombinaison. Les électrodes externes au faisceau sont de polarité négative.

Les électrodes positives sont formées d'un support poreux de nickel fritté dans lequel est incorporé une matière active à base d'hydroxyde de nickel.

Les électrodes négatives sont formées d'un support poreux de nickel fritté dans lequel est incorporé une matière active à base d'hydroxyde de cadmium.

Entre les électrodes positives et négatives est placé un séparateur constitué de deux couches de feutre de polypropylène et imprégné d'électrolyte qui est une solution aqueuse de potasse KOH et de lithine LiOH à une concentration de 7,8N. La quantité d'électrolyte introduite dans l'accumulateur correspond à 95% de la porosité totale des électrodes positives et négatives et du séparateur, augmentée de la quantité d'électrolyte correspondant à l'électrode de recombinaison déterminée expérimentalement.

Le système de recombinaison est constitué de deux électrodes de recombinaison, chacune associée à un espaceur. Chaque électrode de recombinaison est placée à une extrémité du faisceau au contact de l'électrode négative terminale.

L'électrode de recombinaison est constituée d'un support en mousse de nickel ($3,8g/dm^2$) sur lequel est enduit une pâte composée de 70% de carbone, 20% de PTFE, et 10% d'une colle type polyester à raison d'environ $0,6g/dm^2$. Au carbone en suspension agitée dans l'eau, on ajoute la colle puis une solution de PTFE à 60% en maintenant sous agitation jusqu'à homogènéisation. L'électrode réalisée est séchée à 110°C pendant quelques minutes, puis laminée à une épaisseur de 0,75mm, et enfin découpée.

L'espaceur est une pièce hydrophobe en polypropylène munie de côtes, analogue à celle représentée sur la figure 3, et dont les dimensions sont JK = LM = 0,80mm, KL = 1mm, et MN = 12mm.

## EXEMPLE 2

A titre comparatif, on réalise un accumulateur A2 analogue à Al à l'exception des espaceurs qui sont remplacés par des cales parallélépipédiques pleines de polypropylène de 1,05mm d'épaisseur afin de conserver un serrage identique du faisceau.

## EXEMPLE 3

A titre comparatif, on réalise un accumulateur A3 analogue à A1 à l'exception des électrodes de recombinaison et des espaceurs qui sont remplacés par des cales parallélépipédiques pleines de polypropylène de 1,80mm d'épaisseur afin de conserver un serrage identique du faisceau.

## EXEMPLE 4

La capacité nominale des accumulateurs A1, A2 et A3 est de 5Ah.

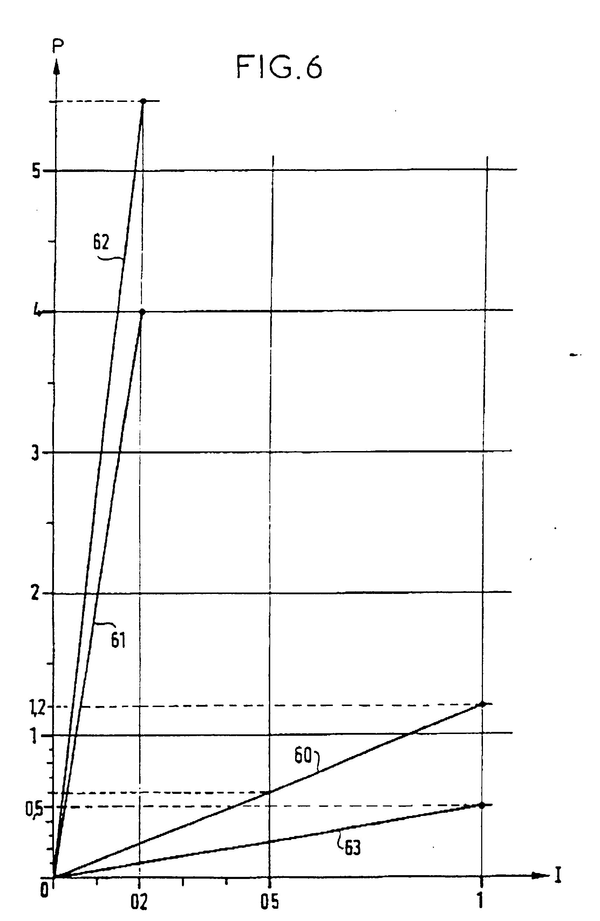

Après quelques cycles de charge et décharge destinés à former les électrodes, on procède à l'évaluation électrochimique de la manière suivante: on effectue la charge de l'accumulateur au régime choisi jusqu'à stabilisation de la pression, cette valeur est appelée pression de recombinaison. Le test a été effectué pour des régimes I de charge de 0,2A/Ah (C/5), 0,5A/Ah (C/2), et 1A/Ah (C). Les résultats sont présentés sur la figure 6.

Pour l'accumulateur A1 selon l'invention, la pression de recombinaison au régime de 0,2A/Ah n'est que de 0,03 MPa (0,3 bars) et 0,12 Mpa (1,2 bars) au régime de 1A/Ah(courbe 60).

Comparativement, elle est de 0,4 MPa (4 bars) (courbe 61) au régime de 0,2A/Ah pour l'accumulateur A2 dont l'électrode de recombinaison n'est pas associée à un espaceur et de 0,55 Mpa 5,5 bars au même régime pour l'accumulateur A3 ne possédant pas d'électrode de recombinaison.

Ces résultats mettent bien en évidence l'importance de l'amélioration apportée par l'association d'un espaceur à l'électrode de recombinaison.

## EXEMPLE 5

On réalise un accumulateur B1 selon l'invention analogue à celui décrit dans l'exemple 1 à l'exception de l'électrode négative qui est constituée d'un support en feuillard perforé nickelé sur lequel est déposé un mélange d'oxyde de cadmium et d'un liant polymère.

L'accumulateur B1 est évalué dans les mêmes conditions que celles données dans l'exemple 4, et on obtient la courbe 63 de la figure 6. Par rapport aux pressions de recombinaison mesurées pour l'accumulateur A1 (courbe 60), celles mesurées pour l'accumulateur B1 (courbe 63) montrent un effet favorable de la technologie d'électrode négative sur feuillard.

## EXEMPLE 6

On réalise les accumulateurs B2 à B10 selon l'invention analogues à celui décrit dans l'exemple 5 à l'exception de l'électrode auxiliaire pour laquelle plusieurs compositions de la pâte ont été testées, qui sont données dans le tableau I.

L'évaluation des pressions de recombinaison pour différents régimes de surcharge a été effectuée dans les conditions décrites dans l'exemple 4 et les résultats figurent dans le tableau I.

TABLEAU I

| accumulateur | composition de la pâte (%) | | | pression de recombinaison (bars, 1bar correspond à 0,1 MPa) | | |
|---|---|---|---|---|---|---|
| | carbone | PTFE | colle | 0,2A/Ah | 0,5A/Ah | 1A/Ah |
| B2 | 50 | 40 | 10 | 0,27 | 0,45 | 0,80 |
| B3 | 50 | 25 | 25 | 0,30 | 0,45 | 0,90 |
| B4 | 50 | 10 | 40 | 0,30 | 0,55 | 1,10 |
| B5 | 10 | 50 | 40 | 0,25 | 0,45 | 0,90 |
| B6 | 25 | 50 | 25 | 0,25 | 0,45 | 0,90 |
| B7 | 40 | 50 | 10 | 0,25 | 0,50 | 1,00 |
| B8 | 10 | 40 | 50 | 0,37 | 0,65 | 1,08 |
| B9 | 25 | 25 | 50 | 0,35 | 0,68 | 1,07 |
| B10 | 40 | 10 | 50 | 0,30 | 0,58 | 1,06 |

On constate que la composition de la pâte dans le domaine étudié à une influence limitée sur la pression de recombinaison. L'accès de l'oxygène gazeux à la surface de l'électrode apparait donc comme la condition principale à un fonctionnement à basse pression de l'accumulateur. Il est préservé par la présence de l'espaceur.

Après chaque surcharge, la capacité restituée par l'accumulateur a été mesurée à la décharge suivante réalisée à IA/Ah avec arrêt à une tension de 1 Volt. Les valeurs de capacité obtenues sont très voisines et varient de 5,2Ah à 5,5Ah, ce qui traduit un fonctionnement homogène des faisceaux.

EXEMPLE 7

On réalise deux accumulateurs B11 et B12 selon l'invention analogues à celui décrit dans l'exemple 1 à l'exception de l'électrode auxiliaire qui est laminée respectivement à une épaisseur de 0,35mm et de 0,55mm.

L'évaluation des pressions de recombinaison pour différents régimes de surcharge a été effectuée dans les conditions décrites dans l'exemple 4 et les résultats figurent dans le tableau II.

TABLEAU II

| accumulateur | électrode épaisseur mm | pression de recombinaison (bars) | | |
|---|---|---|---|---|
| | | 0,2A/Ah | 0,5A/Ah | 1A/Ah |
| B11 | 0,35 | 0,4 | 1,1 | 2,6 |
| B12 | 0,55 | 0,2 | 0,5 | 1,4 |
| B1 (référence) | 0,75 | 0,1 | 0,3 | 1,0 |

On voit que la pression augmente pour une épaisseur faible de l'électrode de recombinaison. Dans ce cas, la surface de l'électrode devient plus hydrophobe et n'autorise plus la formation de films fins d'électrolyte nécessaires à la formation de ménisques triphasiques, sièges de la réaction de recombinaison. Les pressions obtenues sont néanmoins toujours inférieures à celles observées pour des accumulateurs ne comportant pas de système de recombinaison.

EXEMPLE 8

On réalise les accumulateurs B13 à B20 selon l'invention analogues à celui décrit dans l'exemple 5 mais comportant 15 couples d'électrodes (capacité 15Ah) et à l'exception de l'espaceur à côtes dont les dimensions des côtes sont variables et données dans le tableau III. On remarquera que l'espaceur de l'accumulateur B17 a les mêmes dimensions que celui de l'accumulateur B1.

TABLEAU III

| accumulateur | distance entre les côtes (mm) | épaisseur des côtes (mm) | figure 7 courbes n° |
|---|---|---|---|
| B13 | 3 | 0,80 | 70 et 70' |
| B14 | 5 | 0,80 | 71 et 71' |
| B15 | 5 | 1,00 | 72 et 72' |
| B16 | 5 | 1,20 | 73 et 73' |
| B17 | 12 | 0,80 | 74 et 74' |

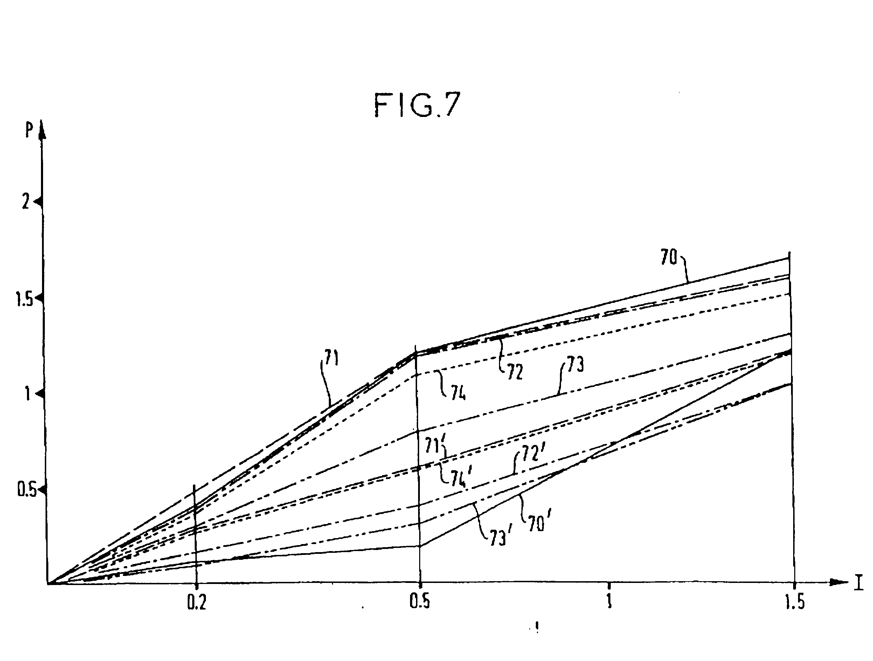

L'évaluation des pressions de recombinaison pour les régimes de surcharge de 0,2A/Ah, 0,5A/Ah, et IA/Ah a été effectuée, dans les conditions décrites dans l'exemple 4, après 5 cycles et après 2800 cycles à une profondeur de décharge de 15%. Les résultats sont représentés sur la figure 7 par les courbes 70, 71, 72, 73 et 74 après 5 cycles, et par les courbes correspondantes 70', 71', 72', 73' et 74' après 2800 cycles.

On note qu'après 2800 cycles les pressions de recombinaison sont toujours légèrement inférieures à celles mesurées après 5 cycles. Ces résultats montrent bien que le système de recombinaison selon la présente invention confère à l'accumulateur des performances stables pendant toute sa durée d'utilisation. Ceci est dû au fait que les films fins d'électrolyte développés initialement à la surface de l'électrode de recombinaison n'évoluent pas et ne modifie donc pas le nombre de sites de recombinaison triphasiques.

Après chaque surcharge, la capacité restituée par l'accumulateur a été mesurée à la décharge suivante réalisée à 1A/Ah avec arrêt à une tension de 1 Volt. Les valeurs de capacité obtenues sont voisines de 17,3Ah, ce qui traduit un fonctionnement homogène des faisceaux.

EXEMPLE 9

On réalise un accumulateur H1 selon l'invention analogue à celui décrit dans l'exemple 1, mais comportant 11 couples d'électrodes, à l'exception du séparateur qui est constitué de trois couches de feutre polypropylène et de l'électrode négative.
L'électrode négative est constituée d'un support en mousse de nickel dans laquelle est introduit un mélange d'un alliage hydrurable de type $AB_5$ et d'un liant polymère.

EXEMPLE 10

A titre comparatif, on réalise un accumulateur H2 analogue à H1 à l'exception des électrodes de recombinaison et des espaceurs qui sont remplacés par des cales parallélépipédiques pleines de polypropylène de 1,80mm d'épaisseur afin de conserver un serrage identique du faisceau.

EXEMPLE 11

La capacité nominale des accumulateurs H1 et H2 est de 11Ah. Les pressions de recombinaison sont mesurées à un régime de 0,2A/Ah dans les conditions décrites dans l'exemple 4 après 5 cycles et après 30 cycles Les résultats sont rassemblés dans le tableau IV.

TABLEAU IV

| accumulateur | pression de recombinaison (bars) | |
|---|---|---|
| | après 5 cycles | après 30 cycles |
| H1 | 0,8 | 0,7 |
| H2 | 3,5 | >5 |

Ces résultats montrent clairement que les pressions de recombinaison sont considérablement abaissées par la présence de l'électrode de recombinaison associée à un espace incompressible ménagé par une pièce rigide hydrophobe.
Que ce soit dans les accumulateurs nickel-cadmium décrits précédemment ou dans les accumulateurs nickel-hydrure ci-dessus, la présence du système de recombinaison selon l'invention permet un fonctionnement à faible pression dont les performances restent inchangées tout au long de la durée d'utilisation de l'accumulateur.

**Revendications**

1. Générateur électrochimique secondaire étanche prismatique à électrolyte alcalin, de capacité au moins égale à 5Ah et de faible pression interne, comportant d'une part un faisceau de plusieurs couples électrochimiques constitués cnacun d'une anode, d'une cathode contenant de l'hydroxyde de nickel et d'un séparateur, et d'autre part au moins une électrode pour la recombinaison de l'oxygène à support conducteur en mousse rigide enduit d'une pâte contenant un matériau carboné et un liant, ayant deux faces opposées de grande surface dont la première face est accolée à l'une desdites anodes et dont la deuxième face est au contact l'une espaceur, ladite électrode étant suffisamment rigide pour résister à la pression dudit faisceau et ledit espaceur étant constitué d'une structure qui possède une rigidité suffisante perpendiculairement à la surface de ladite électrode et comprend des reliefs au contact de ladite deuxième face de ladite électrode évitant sa déformation.

2. Générateur selon la revendication 1, dans lequel ladite électrode est partiellement hydrophobe

3. Générateur selon l'une des revendications 1 et 2, dans lequel ladite électrode est composée d'un support conducteur de courant en mousse de nickel enduit d'un mélange de carbone, de polytétrafluoroéthylène, et d'un agent d'accrochage.

4. Générateur selon la revendication 3, dans lequel ledit mélange se compose de 70% en poids de carbone, 20% en poids de polytétrafluoroéthylène, et 10% en poids d'une colle polyester.

5. Générateur selon l'une des revendications précédentes, dans lequel ladite structure comprend une pièce comportant des reliefs au contact de ladite deuxième face de ladite électrode de recombinaison.

6. Générateur selon la revendication 5, dans lequel ladite pièce comporte des côtes rectilignes.

7. Générateur selon l'une des revendications 5 et 6, dans lequel ladite pièce est constituée par de reliefs solidaires de la paroi interne dudit bac.

8. Générateur selon l'une des revendications 5 et 6, dans lequel ladite pièce est choisie parmi un déployé, une grille, et un tissu.

9. Générateur selon l'une des revendications précédentes, dans lequel ladite structure est hydrophobe.

10. Générateur selon l'une des revendications 1 à 9, dans lequel ladite électrode de recombinaison et ladite structure qui lui est associée sont situées à l'une des extrémités dudit faisceau d'électrodes.

11. Générateur selon l'une des revendications 1 à 9, dans lequel ladite électrode de recombinaison et ladite structure qui lui est associée sont situées à chacune des extrémités dudit faisceau d'électrodes.

12. Générateur selon l'une des revendications 1 à 9, dans lequel ledit faisceau d'électrodes est divisé en sous-faisceau et par le fait que ladite électrode de recombinaison et ladite structure qui lui est associée sont situées à chacune des extrémités desdits sous-faisceaux d'électrodes.

13. Générateur selon la revendication 12, dans lequel deux structures placées côte à côte entre deux sous-faisceaux, sont constituées d'une seule pièce portant des reliefs sur chacune de ses faces.

14. Générateur selon l'une des revendications 1 à 13, dans lequel ladite anode contient un alliage hydrurable.

15. Générateur selon l'une des revendications 1 à 13, dans lequel ladite anode contient du cadmium.

16. Générateur selon l'une des revendications précédentes, dans lequel ledit électrolyte est une solution aqueuse d'hydroxydes de potassium et de lithium.


**Patentansprüche**

1. Prismatischer, dichter, aufladbarer elektrochemischer Generator mit alkalischem Elektrolyten, mit einer Kapazität von wenigstens gleich 5 Ah und geringem Innendruck, der einerseits ein Bündel von mehreren elektrochemischen Elementen, die jeweils durch eine Anode, eine Nickelhydroxid enthaltende Kathode und einen Separator gebildet sind, und andererseits wenigstens eine Elektrode für die Rekombination von Sauerstoff mit einem leitfähigen Träger aus steifem Schaum, überzogen mit einer ein kohlenstoffhaltiges Material und einen Binder enthaltenden Paste, umfaßt, wobei die Elektrode zwei entgegengesetzte Seiten mit großer Oberfläche hat, von denen die erste Seite an eine der Anoden angebaut ist und von denen die zweite Seite in Kontakt mit einem Abstandhalter ist, wobei die Elektrode steif genug ist, um dem Druck des Bündels standzuhalten und der Abstandhalter durch eine Struktur gebildet ist, die eine ausreichende Steife senkrecht zur Oberfläche der Elektrode besitzt und Vorsprünge in Kontakt mit der zweiten Seite der Elektrode umfaßt, die ihre Verformung verhindern.

2. Generator nach Anspruch 1, bei dem die Elektrode teilweise hydrophob ist.

3. Generator nach einem der Ansprüche 1 und 2, bei dem die Elektrode aus einem stromleitendem Träger aus Nikkelschaum, überzogen mit einem Gemisch von Kohlenstoff, Polytetrafluorethylen und einem Haftmittel, zusammengesetzt ist.

4. Generator nach Anspruch 3, bei dem das Gemisch sich aus 70 Gew.-% Kohlenstoff, 20 Gew.-% Polytetrafluorethylen und 10 Gew.-% eines Polyesterklebers zusammensetzt.

5. Generator nach einem der vorhergehenden Ansprüche, bei dem die Struktur ein Teil umfaßt, das Vorsprünge in Kontakt mit der zweiten Seite der Rekombinationselektrode umfaßt.

**6.** Generator nach Anspruch 5, bei dem das Teil geradlinige Seiten aufweist.

**7.** Generator nach einem der Ansprüche 5 und 6, bei dem das Teil durch mit der Innenwand des Behälters fest verbundene Vorsprünge gebildet ist.

**8.** Generator nach einem der Ansprüche 5 und 6, bei dem das Teil ausgewählt ist unter einem Streckmaterial, einem Gitter und einem Gewebe.

**9.** Generator nach einem der vorhergehenden Ansprüche, bei dem die besagte Struktur hydrophob ist.

**10.** Generator nach einem der Ansprüche 1 bis 9, bei dem die Rekombinationselektrode und die ihr zugeordnete Struktur an einem der Enden des Bündels von Elektroden angeordnet sind.

**11.** Generator nach einem der Ansprüche 1 bis 9, bei dem die Rekombinationselektrode und die ihr zugeordnete Struktur an beiden Enden des Bündels von Elektroden angeordnet sind.

**12.** Generator nach einem der Ansprüche 1 bis 9, bei dem das Bündel von Elektroden in Unterbündel aufgeteilt ist und die Rekombinationselektrode und die ihr zugeordnete Struktur an jedem der Enden der Unterbündel von Elektroden angeordnet sind.

**13.** Generator nach Anspruch 12, bei dem zwei Strukturen, die Seite an Seite zwischen zwei Unterbündeln angeordnet sind, aus einem einzigen Teil gebildet sind, das Vorsprünge an seinen beiden Seiten trägt.

**14.** Generator nach einem der Ansprüche 1 bis 13, bei dem die Anode eine hydrierbare Legierung enthält.

**15.** Generator nach einem der Ansprüche 1 bis 13, bei dem die Anode Cadmium enthält.

**16.** Generator nach einem der vorhergehenden Ansprüche, bei dem der Elektrolyt eine wäßrige Lösung von Kalium- und Lithiumhydroxid ist.

**Claims**

**1.** A sealed prismatic secondary electrcchemical cell having an alkaline electrolyte of low irternal pressure and of capacity not less than 5 Ah, said cell comprising firstly a stack of a plurality of electrochemical pairs each constituted by an anode, a cathode containing nickel hydroxide, and a separator, and secondly at least one oxygen recombination electrode having a rigid foam conductive support coated with a paste containing a carbonaceous material and a binder, and having two opposite faces of large surface area, the first face being against one of said anodes and the second face being in contact with the spacer. said electrode being sufficiently rigid to withstand the pressure of said stack, and said spacer being constituted by a structure that is sufficiently rigid perpendicularly to the surface of said electrode and that includes projections in contact with said second face of said electrode thereby avoiding deformation thereof.

**2.** A cell according to claim 1, in which said electrode is partially hydrophobic.

**3.** A cell according to claim 1 or 2, in which said electrode is composed of a current conductive support of nickel foam coated with a mixture of carbon. polytetrafluoroethylene, and a bonding agent.

**4.** A cell according to claim 3, in which said mixture is composed of 70% by weight of carbon, 20% by weight of polytetrafluoroethylene and 10% by weight of a polyester adhesive.

**5.** A cell according to any preceding claim, in which said structure comprises a part comprising projections in contact with said second face of said recombination electrode.

**6.** A cell according to claim 5. in which said part comprises rectilinear ribs.

**7.** A cell according to claim 5 or 6, in which said part is constituted by projections integral with the internal wall of said container.

8. A cell according to claim 5 or 6, in which said part may be an expanded metal. a grid or a gauze.

9. A cell according to any preceding claim. in which said structure is hydrophobic.

10. A cell according to any of claims 1 to 9, in which said recombination electrode and said structure associated with it are situated at one end of said stack of electrodes.

11. A cell according to any of claims 1 to 9, in which said recombination electrode and said structure associated with it are situated at each end of said stack of electrodes.

12. A cell according to any of claims 1 to 9, in which said stack of electrodes is divided into sub-stacks and in which said recombination electrode and said structure associated with it are situated at each of the ends of said sub-stacks of electrodes.

13. A cell according to claim 12, in which said two structures placed side-by-side between two sub-stacks, are constituted by a single part bearing projections on both faces.

14. A cell according to any of claims 1 to 13, in which said anode contains a hydridable composition.

15. A cell according to any of claims 1 to 13, in which said anode contains cadmium.

16. A cell according to any preceding claim. in which said electrolyte is an aqueous solution of potassium and lithium hydroxides.

## FIG.1

## FIG.2

# FIG.3

# FIG.4

# FIG.5

FIG.6

EP 0 666 608 B1

FIG.7